# EUROPÄISCHE PATENTSCHRIFT

(11) **EP 3 385 120 B1**
(45) Veröffentlichungstag und Bekanntmachung des Hinweises auf die Patenterteilung: **01.04.2020**
(21) Anmeldenummer: 18165889.9
(22) Anmeldetag: 05.04.2018
(51) Int. Cl.: B60P 3/079, B60P 7/08

(54) **VORRICHTUNG ZUR SICHERUNG EINER LADUNG**
DEVICE FOR PROTECTING A LOAD
DISPOSITIF DE PROTECTION D'UNE CHARGE

(30) Priorität: 05.04.2017 AT 502732017
(43) Veröffentlichungstag der Anmeldung: 10.10.2018
(73) Patentinhaber: Kässbohrer Transport Technik GmbH, 5301 Eugendorf (AT)
(72) Erfinder: KOLLER, Stephan, 5082 Grödig (AT)
(74) Vertreter: Torggler & Hofinger Patentanwälte

(56) Entgegenhaltungen:
- FR-A1- 2 675 750
- GB-A- 2 164 081
- US-A- 3 685 778
- US-A- 5 265 992
- US-A1- 2007 212 185

## Beschreibung

Die Erfindung betrifft eine Vorrichtung zur Sicherung einer Ladung relativ zu einer Oberfläche, wobei die Oberfläche zumindest eine Öffnung aufweist, mit den Merkmalen des Oberbegriffs des Anspruchs 1. Eine gattungsgemäße Vorrichtung wird in GB 2164081 A offenbart.

Eine gattungsgemäße Vorrichtung zur Sicherung einer Ladung ist beispielsweise bei der Verladung von Fahrzeugen in Form eines in eine Öffnung bzw. ein Loch eines Lochblechs eingreifenden Hakens - gegebenenfalls in Verbindung mit einem Zurrgurt - bekannt. Problematisch bei solchen gattungsgemäßen Vorrichtungen zur Sicherung einer Ladung ist die mangelnde Sicherung der Vorrichtung selbst gegen ein unbeabsichtigtes Lösen aus deren Sicherungsposition. Bei dem genannten Beispiel der Vorrichtung zur Sicherung einer Ladung in Form eines in eine Öffnung eines Lochblechs eingreifenden Hakens besteht etwa die Problematik, dass sich der Haken - gegebenenfalls bei unzureichender oder nachlassender Spannung eines etwaigen Zurrgurts - aus dessen Sicherungsstellung in der Öffnung unbeabsichtigt lösen kann.

Aufgabe der Erfindung ist die Bereitstellung einer gattungsgemäßen Vorrichtung zur Sicherung einer Ladung bei welcher die oben diskutierten Probleme vermieden werden.

Diese Aufgabe wird durch eine Vorrichtung zur Sicherung einer Ladung mit den Merkmalen des Anspruchs 1 gelöst. Vorteilhafte Ausführungsformen der Erfindung sind in den abhängigen Ansprüchen definiert.

Die erfindungsgemäße Vorrichtung zur Sicherung einer Ladung relativ zu einer mindestens eine Öffnung aufweisenden Oberfläche kann zunächst - wie auch bei gattungsgemäßen Vorrichtungen - einen Zurranschlag und einen Zurranker mit zumindest einem Fortsatz aufweisen. Zur Sicherung der Ladung ist vorgesehen, dass der Zurranker mit dem zumindest einen Fortsatz in einer Einführposition in die zumindest eine Öffnung der Oberfläche einführbar ist und der zumindest eine Fortsatz durch eine Bewegung in eine Sicherungsposition bringbar ist, in welcher der Fortsatz die Öffnung der Oberfläche hintergreift.

Bei einer beispielhaften Ausführung der Vorrichtung zur Sicherung einer Ladung in Form eines in eine Öffnung einer Oberfläche eingreifenden Hakens kann der Zurranschlag durch eine Öse des Hakens und der Zurranker durch einen gekrümmten Abschnitt des Hakens ausgebildet werden. Eine Einführposition kann einer Stellung des Hakens entsprechen, in welcher dieser zumindest mit dessen gekrümmten Abschnitt in eine Öffnung der Oberfläche einführbar bzw. einsetzbar ist. Einer Sicherungsposition kann eine Stellung des Hakens entsprechen, in welcher dieser etwa mit dessen gekrümmten Abschnitt die Öffnung der Oberfläche hintergreift, wobei der Haken von der Einführposition beispielsweise durch eine Schwenk- bzw. Drehbewegung in die Sicherungsposition bringbar ist.

Im Unterschied zu einer im Stand der Technik bekannten Vorrichtung weist die erfindungsgemäße Vorrichtung zur Sicherung einer Ladung zusätzlich wenigstens ein in eine Öffnung der Oberfläche einbringbares und/oder an der Oberfläche abstützbares Sicherungsmittel auf, welches durch Blockieren der Bewegung des Fortsatzes ein unbeabsichtigtes Übergehen des zumindest einen Fortsatzes des Zurrankers von der Sicherungsposition in die Einführposition verhindert. Durch das zusätzliche Sicherungsmittel kann verhindert werden, dass der zumindest eine Fortsatz des Zurrankers unbeabsichtigt aus der Sicherungsposition herausbewegt wird und der Zurranker unbeabsichtigt aus der Öffnung gelöst werden kann. Das Sicherungsmittel kann somit den Verbleib des zumindest einen Fortsatzes des Zurrankers in der Sicherungsposition sichern. Um das Übergehen des zumindest einen Fortsatzes des Zurrankers von der Sicherungsposition in die Einführposition zu verhindern, kann das Sicherungsmittel - welches gesondert von dem Zurranker ausgebildet sein kann - zumindest abschnittsweise zusätzlich in eine Öffnung der Oberfläche eingebracht werden und sich zusätzlich bzw. alternativ dazu an der Oberfläche entsprechend abstützen.

Eine Einführposition kann allgemein einer Stellung des Zurrankers entsprechen, in welcher zumindest ein Abschnitt des Zurrankers mit dem zumindest einen Fortsatz in die Öffnung der Oberfläche einbringbar bzw. einsetzbar ist. Die Einführposition kann somit auch einer Stellung entsprechen, in welcher zumindest der Abschnitt des Zurrankers mit dem zumindest einen Fortsatz aus der Öffnung der Oberfläche gelöst bzw. entfernt werden kann. Eine Sicherungsposition kann allgemein einer Stellung des Zurrankers entsprechen, in welcher der zumindest eine Fortsatz die Öffnung der Oberfläche hintergreift, wodurch der Zurranker in der Öffnung der Oberfläche verankert ist. Eine Bewegung des Fortsatzes von der Einführposition in die Sicherungsposition kann eine Schwenk- und/oder Drehbewegung des Fortsatzes bzw. des Zurrankers umfassen.

Bei der mindestens eine Öffnung aufweisenden Oberfläche kann es sich beispielsweise um ein Lochblech handeln, welches eine Fahrbahn eines Autotransporters ausbilden kann. Bei der Öffnung, in welche das Sicherungsmittel einbringbar, kann es sich um dieselbe Öffnung handeln, in welche der Zurranker eingebracht ist, oder um eine gesondert ausgebildete Öffnung in der Oberfläche. Bei der Ladung, welche relativ zu der Oberfläche gesichert werden soll, kann es sich beispielsweise um auf der Oberfläche abgestellte Fahrzeuge handeln.

Es kann vorgesehen sein, dass das Sicherungsmittel zusätzlich zum Zurranker in eine Öffnung der Oberfläche einbringbar und relativ zum Zurranker feststellbar ist. Unter einer Feststellbarkeit des Sicherungsmittels zum Zurranker kann dabei verstanden werden, dass Relativbewegungen des Sicherungsmittels relativ zum Zurranker - insbesondere ein Verschieben oder ein Verschwenken des Sicherungsmittels relativ zum Zurranker - unterbunden werden können. Dadurch, dass das Sicherungsmittel relativ zum Zurranker feststellbar ist, kann eine Bewegungskopplung des Sicherungsmittels und des Zurrankers erreicht werden. Die Bewegungskupplung kann durch einen Formschluss und/oder einen Kraftschluss erfolgen. Wenn beispielsweise der zumindest eine Fortsatz des Zurrankers alleine in der Öffnung zwischen der Einführposition und der Sicherungsposition bewegbar ist, kann durch die Feststellung des zusätzlich in einer bzw. der Öffnung eingebrachten Sicherungsmittels relativ zum Zurranker die Bewegung des Fortsatzes - insbesondere eine Bewegung relativ zur Öffnung - blockiert werden. Dabei kann vorteilhaft sein, wenn durch das zusätzlich zum Zurranker in eine Öffnung eingebrachten Sicherungsmittel ein Formschluss des Verbunds des Zurrankers mit dem Sicherungsmittel und der Öffnung entsteht.

Dabei kann vorteilhaft sein, dass der Zurranker einen Ankerschaft aufweist und der zumindest eine Fortsatz quer zum Ankerschaft verläuft und das zumindest eine Sicherungsmittel in dem in die Öffnung eingebrachten Zustand einen neben dem Ankerschaft verlaufenden, stabförmigen Abschnitt aufweist. Der stabförmiger Abschnitt kann dabei im Wesentlichen parallel zum Ankerschaft verlaufen. Die Längserstreckung des stabförmigen Abschnitts kann im Wesentlichen der Längserstreckung des Ankerschafts entsprechen.

Es kann von Vorteil sein, dass das zumindest eine Sicherungsmittel einen quer zum stabförmigen Abschnitt verlaufenden Querabschnitt aufweist. Durch einen solchen Querabschnitt, welcher als Bedienelement für das Sicherungsmittel verwendet werden kann, kann sich ein Einbringen bzw. Entfernen des Sicherungsmittels in eine Öffnung der Oberfläche vereinfachen lassen.

Es kann vorgesehen sein, dass das zumindest eine Sicherungsmittel - über ein am zumindest einen Sicherungsmittel angeordnetes Langloch am Zurranker gelagert ist. Bei einer Lagerung über ein am Sicherungsmittel angeordnetes Langloch kann sich das Sicherungsmittel relativ zum Zurranker verschiebbar ausbilden lassen. Dadurch kann ein Eingreifen des Sicherungsmittels in unterschiedlich tiefe Öffnungen, wie sie sich beispielsweise bei unterschiedlich starken Lochblechen ergeben können, sichergestellt werden.

Dabei kann weiter vorgesehen sein, dass das zumindest eine Sicherungsmittel in einem Loch, einem Langloch des Zurrankers gelagert ist. Dadurch kann der Bereich, in welchem das Sicherungsmittel relativ zum Zurranker verschiebbar ist, vergrößert werden.

Dabei ist vorgesehen, dass das zumindest eine Sicherungsmittel gelenkig am Zurranker gelagert ist. Insbesondere kann die Lagerung des Sicherungsmittels am Zurranker schwenkbar, vorzugsweise um eine im Wesentlichen quer zum Ankerschaft und im Wesentlichen quer zum zumindest einen Fortsatz des Zurrankers verlaufenden Schwenkachse schwenkbar, ausgebildet sein.

Es kann vorteilhaft sein, dass das zumindest eine Sicherungsmittel wenigstens einen Anschlag aufweist, durch welchen das zumindest eine Sicherungsmittel mittels eines mit dem Zurranschlag verbundenen Anschlagmittels relativ zum Zurranker feststellbar ist. Der Anschlag kann in Form einer Öffnung oder einer Anlagefläche am Sicherungsmittel ausgebildet sein. Bei Vorsehen eines quer zum stabförmigen Abschnitt verlaufenden Querabschnitts kann der Anschlag bzw. die Anlagefläche am Querabschnitt ausgebildet sein.

Ist vorgesehen, dass das zumindest eine Sicherungsmittel ein Verbindungsteil zum formschlüssigen Verbinden des zumindest einen Sicherungsmittels mit einer Oberflächenstruktur der Oberfläche, vorzugsweise einer Prägung einer Öffnung der Oberfläche, aufweist, kann das Übergehen des zumindest einen Fortsatzes des Zurrankers von der Sicherungsposition in die Einführposition ebenso verhindert werden.

Ausführungsbeispiele der Erfindung werden anhand der Figuren diskutiert. Es zeigen:
- Fig. 1a, 1b: perspektivische Ansichten eines Zurrankers,
- Fig. 2a - 2c: perspektivische Ansichten und eine Seitenansicht einer ersten Ausführung der Vorrichtung zur Sicherung einer Ladung,
- Fig. 3a - 3j: eine Abfolge eines Einsetzvorgangs einer Vorrichtung gemäß der ersten Ausführung,
- Fig. 4a - 4c: Seitenansichten von in jeweils eine Öffnung eingesetzten Vorrichtungen gemäß der ersten Ausführung,
- Fig. 5: eine perspektivische Ansicht einer in eine Öffnung eingesetzten Vorrichtung gemäß der ersten Ausführung,
- Fig. 6: eine perspektivische Ansicht einer in eine Öffnung eingesetzten Vorrichtung gemäß einer zweiten Ausführung,
- Fig. 7: eine perspektivische Ansicht einer in eine Öffnung eingesetzten Vorrichtung gemäß einer dritten Ausführung,
- Fig. 8: eine perspektivische Ansicht einer in eine Öffnung eingesetzten Vorrichtung gemäß einer vierten Ausführung,
- Fig. 9: eine perspektivische Ansicht einer in eine Öffnung eingesetzten Vorrichtung gemäß einer fünften Ausführung,
- Fig. 10: eine perspektivische Ansicht einer in eine Öffnung eingesetzten Vorrichtung gemäß der ersten Ausführung,
- Fig. 11a - 11c: eine perspektivische Ansicht und Schnittdarstellungen einer in eine Öffnung eingesetzten Vorrichtung.

- Fig. 12a, 12b: eine Schnittdarstellung und eine perspektivische Ansicht einer in eine Öffnung eingesetzten Vorrichtung, und
- Fig. 13a, 13b: perspektivische Ansichten einer in eine Öffnung eingesetzten Vorrichtung gemäß der ersten Ausführung.

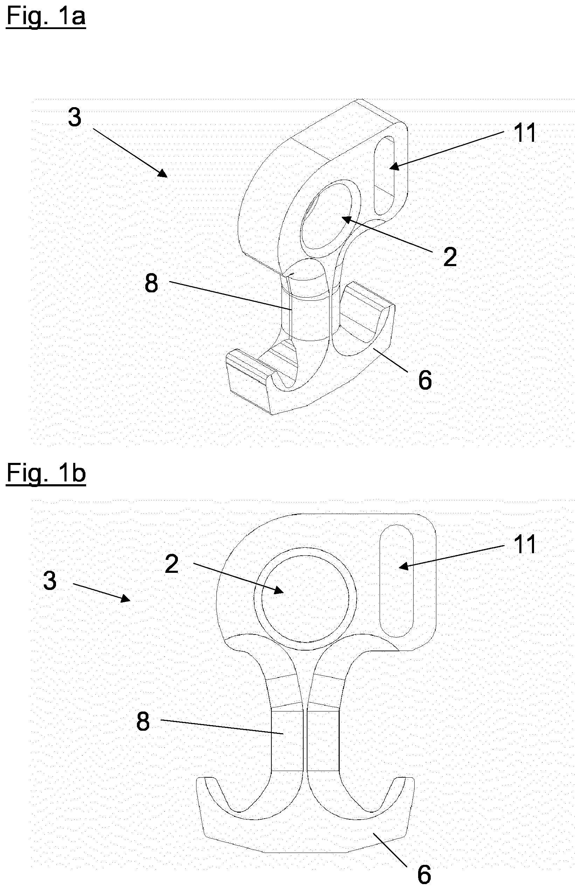

Figur 1a und 1b zeigen eine perspektivische Ansicht und eine Seitenansicht eines Zurrankers 3, welcher eine im Wesentlichen ankerförmige Form mit einem zumindest abschnittsweise im Wesentlichen zylindrischen Ankerschaft 8 und seitlich vom Ankerschaft 8 abstehenden Fortsätzen 6 aufweist. Zum Anschlagen eines zum mittels am Zurranker 3 weist dieser einen Zurranschlag 2 auf, welcher in der gezeigten Ausführung des Zurrankers 3 in Form eines im Wesentlichen kreisrunden Durchbruchs ausgebildet ist. Zur Lagerung eine sich in dieser Darstellung nicht gezeigten Sicherungsmittels am Zurranker weist dieser ein Langloch 11 auf, dessen Längserstreckung im Wesentlichen in Richtung der Längserstreckung des Ankerschafts 8 verläuft.

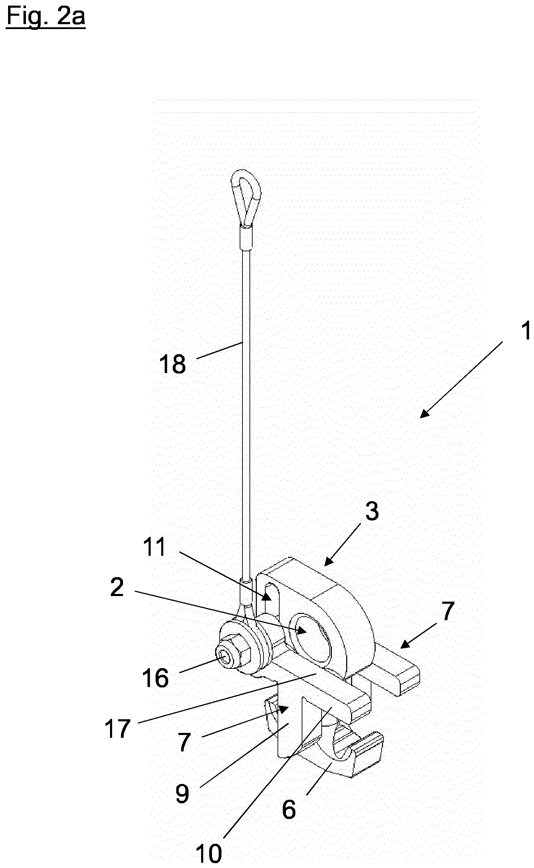

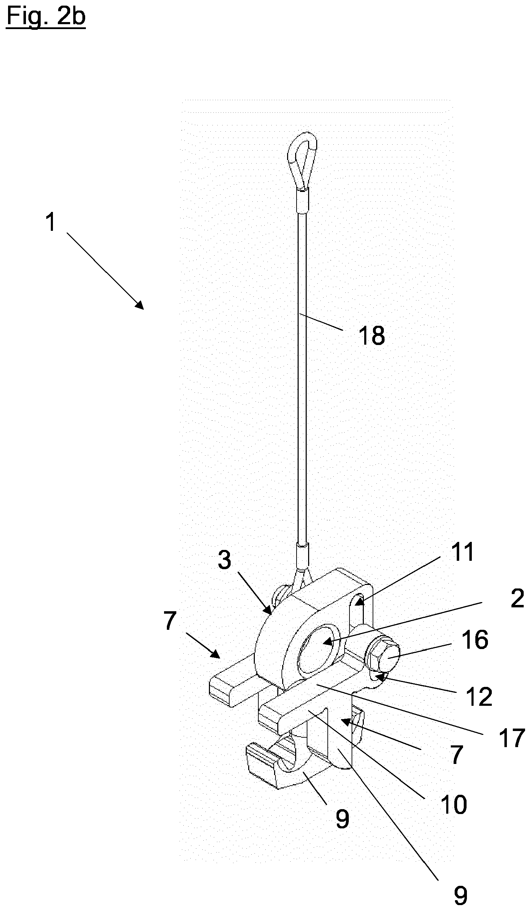

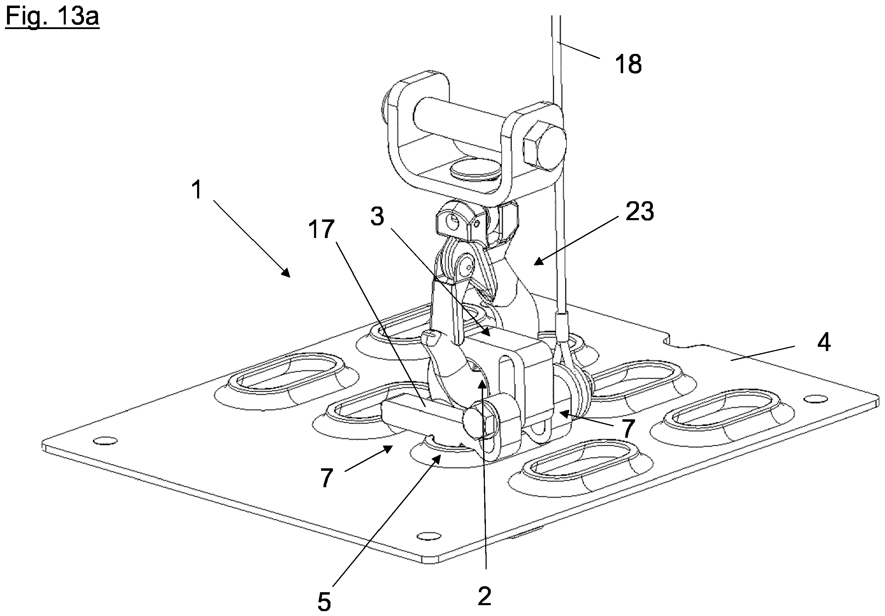

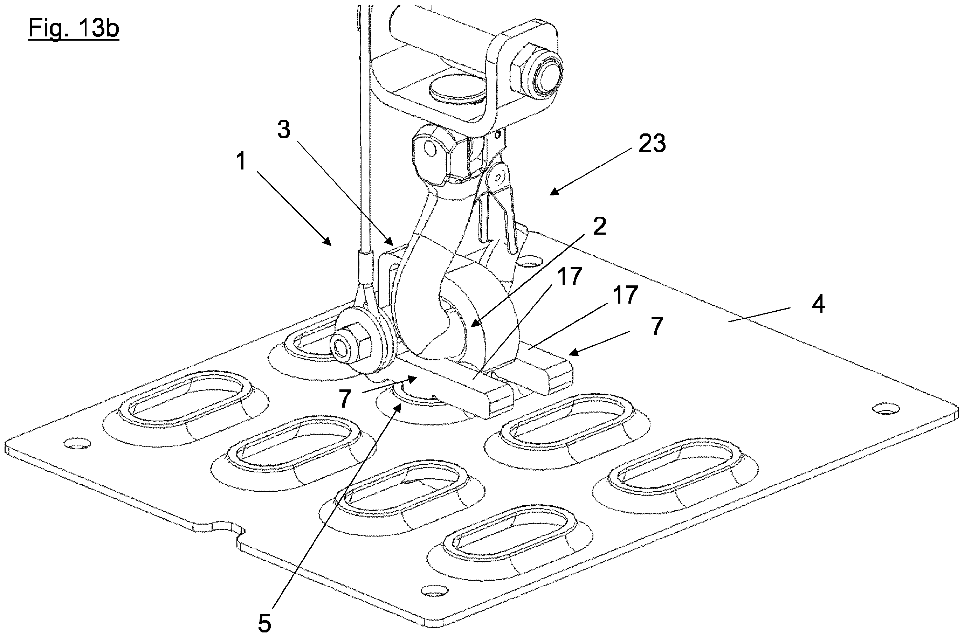

Figur 2a und 2b zeigen jeweils eine perspektivische Ansicht einer ersten Ausführung einer erfindungsgemäßen Vorrichtung 1. Die Vorrichtung 1 umfasst dabei einen Zurranker 3, welcher zwischen zwei Sicherungsmitteln 7 angeordnet ist. Die Sicherungsmittel 7 weisen jeweils einen stabförmigen Abschnitt 9 und einen quer dazu ausgebildeten Querabschnitt 10 auf. Die Sicherungsmittel 7 sind über ein Lagerbolzen 16 schwenkbar in einem Langloch 11 des Zurrankers 3 gelagert. Wie in Figur 2b erkennbar ist, weisen die Sicherungsmittel 7 selbst ein Langloch 12 auf. Die stabförmigen Abschnitte 9 des Sicherungsmittels 7 sind in den Darstellungen so angeordnet, dass sie neben dem Ankerschaft 8 verlaufen. Wie auch ein Vergleich mit der Figur 13 zeigt, weist das Sicherungsmittel 7 einen Anschlag 17 in Form einer Anlagefläche am Sicherungsmittel 7 auf. Um die Vorrichtung 1 verliersicher zu machen, kann eine Fangschnur 18 vorgesehen sein, mittels welcher die Vorrichtung 1 beispielsweise mit einem Anschlagmittel verbunden werden kann.

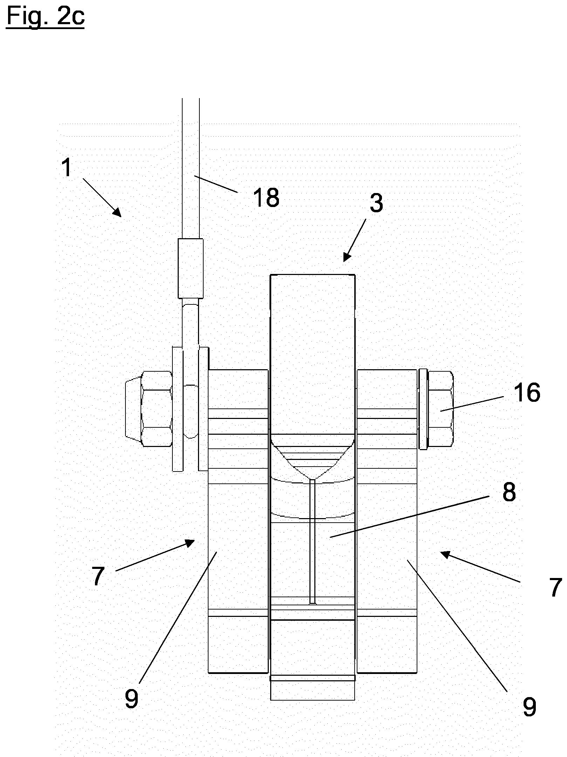

Figur 2c zeigt eine Seitenansicht der ersten Ausführung einer Vorrichtung 1. Dabei ist zu erkennen, dass die Vorrichtung 1 zwei Sicherungsmittel 7 aufweist, zwischen welchen der Zurranker 3 angeordnet ist. Die Sicherungsmittel 7 sind mit dem Lagerbolzen 16 schwenkbar am Zurranker 3 gelagert. Die stabförmigen Abschnitte 9 des Sicherungsmittels 7 sind in der Darstellung so angeordnet, dass sie neben dem Ankerschaft 8 verlaufen.

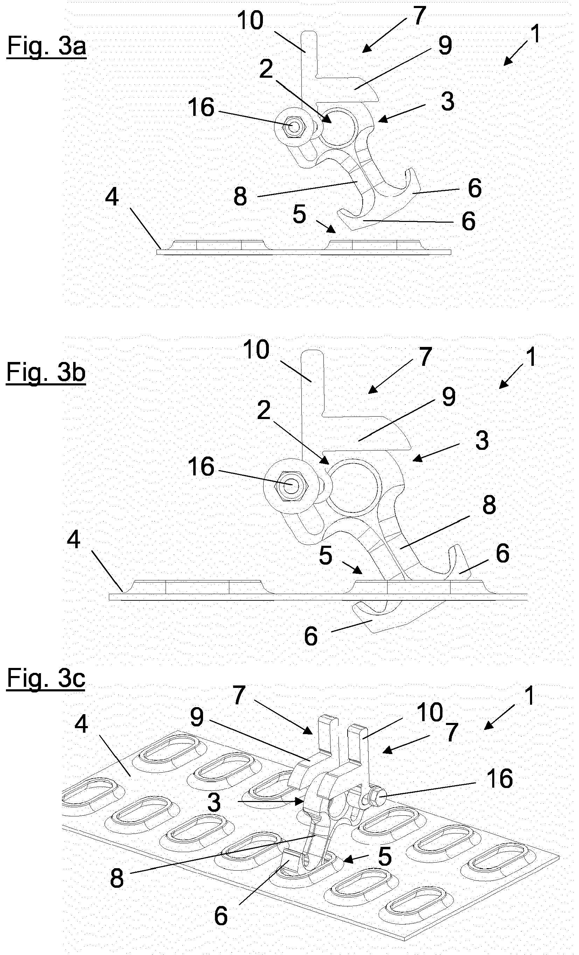

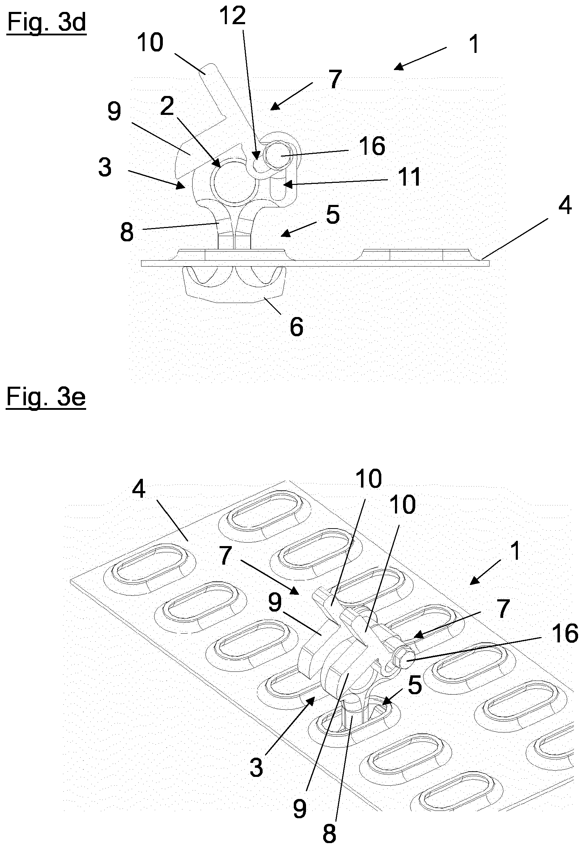

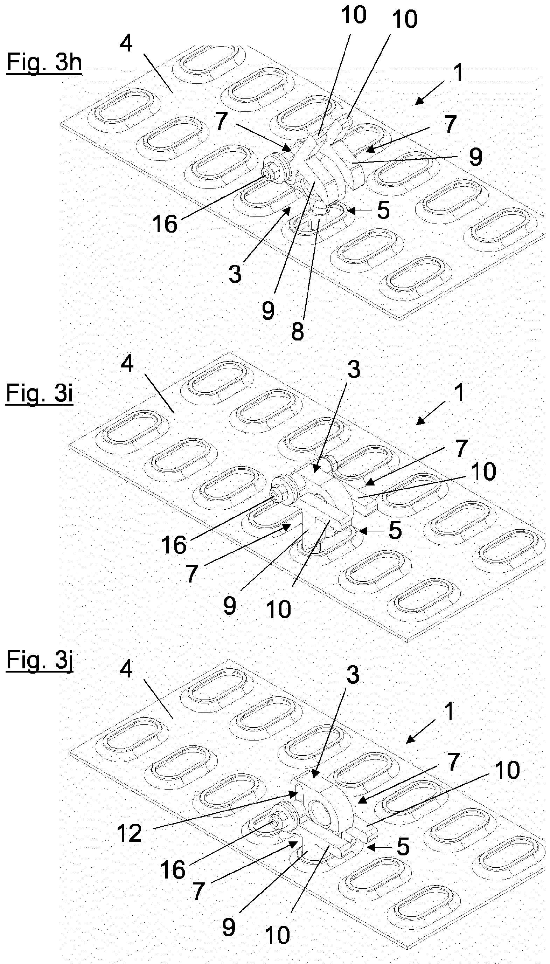

In den Figuren 3a bis 3a sind verschiedene Ansichten eines Einsetzvorgangs eine Vorrichtung 1 gemäß der ersten Ausführung in eine Öffnung 5 eine Oberfläche 4 gezeigt. Dabei ist in Figur 3a eine oberhalb der Öffnung 5 der Oberfläche 4 angeordnete Vorrichtung 1 gezeigt. Die Sicherungsmittel 7 sind um deren gelenkige Lagerung am Zurranker 3 derart verschwenkt worden, dass ein Fortsatz 6 des Zurrankers 3 ungehindert in die Öffnung 5 eingeführt werden kann. Der Fortsatz 6 des Zurrankers 3 befindet sich dabei in einer Einführposition. Da die Erstreckung der Fortsätze 6 des Zurrankers 3 in der gezeigten Ausführung größer ist, als die Längserstreckung der Öffnung 5, ist der Zurranker 3 zum Einsetzen in die Öffnung leicht verkippt worden. In den Figuren 3b und 3c ist der Zurranker 3 der Vorrichtung 1 teilweise in die Öffnung 5 eingesetzt bzw. eingeführt worden. Eine Stellung der Vorrichtung 1 nach einem weiteren Einführen und senkrechten Ausrichten des Zurrankers 3 in die bzw. zur Öffnung 5 ist in den Figuren 3d und 3e gezeigt. Die Erstreckung der Fortsätze 6 des teilweise in die Öffnung 5 eingeführten Zurrankers 3 ist dabei noch im Wesentlichen parallel zur Längserstreckung der als Langloch ausgebildeten Öffnung 5 ausgerichtet.

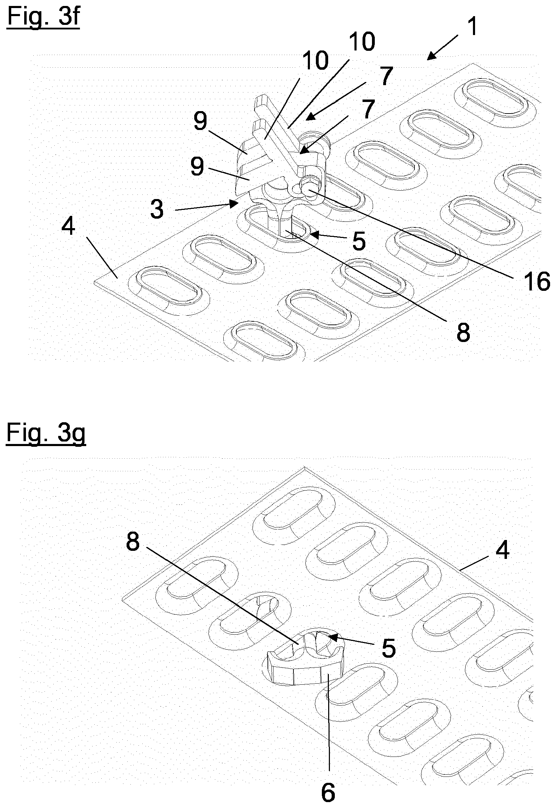

In den Figuren 3f und 3g ist eine Stellung der Vorrichtung 1 gezeigt, welche einer Zwischenstellung des Zurrankers 3 bzw. der Fortsätze 6 zwischen einer Einführposition und der Sicherungsposition entspricht. Die gezeigte Stellung kann sich beispielsweise durch eine Drehbewegung der Vorrichtung 1 um eine beispielsweise durch den Ankerschaft 8 des Zurrankers 3 verlaufende Drehachse ergeben. Wie in der in der Figur 3g dargestellten Unteransicht erkennbar ist, hintergreifen die Fortsätze 6 des Zurrankers 3 bereits teilweise die Öffnung 5.

In den Figuren 3a bis 3j ist eine Stellung der Vorrichtung 1 gezeigt, in welcher sich der Zurranker 3 bzw. die Fortsätze 6 in der Sicherungsposition befinden, d.h. die Fortsätze 6 die Öffnung 5 hintergreifen. Die gezeigte Stellung kann sich beispielsweise durch eine im Vergleich zu den Figuren 3f und 3g fortgeführte Drehbewegung der Vorrichtung 1 um eine beispielsweise durch den Ankerschaft 8 des Zurrankers 3 verlaufende Drehachse ergeben. In dieser Stellung der Vorrichtung 1 können die Sicherungsmittel 7 mittels der gelenkigen Lagerung am Zurranker 3 derart verschwenkt werden, dass die stabförmigen Abschnitt 9 der Sicherungsmittel 7 im Wesentlichen parallel zur Längserstreckung des Ankerschafts 8 des Zurrankers 3 ausgerichtet sind. Durch die Lagerung des der Sicherungsmittel 7 über das im Zurranker 3 ausgebildete Langloch 12 - dessen Längserstreckung Wesentlichen parallel zum Ankerschaft 8 verläuft - und das im Sicherungsmittel 7 ausgebildete Langloch 11 - dessen Längserstreckung im Wesentlichen parallel zum stabförmigen Abschnitt 9 verläuft - kann das Sicherungsmittel 7 relativ zum Zurranker 3 verschoben werden und die Sicherungsmittel 7, hier speziell die stabförmigen Abschnitte 9, zusätzlich zum Zurranker 3 in die Öffnung 5 eingebracht werden. Dadurch kann eine Bewegung des Zurrankers 3 bzw. der Fortsätze 6 aus der Sicherungsposition zurück in die Einführposition blockiert werden und so die Verankerung der Vorrichtung 1 in der Öffnung 5 sichergestellt werden.

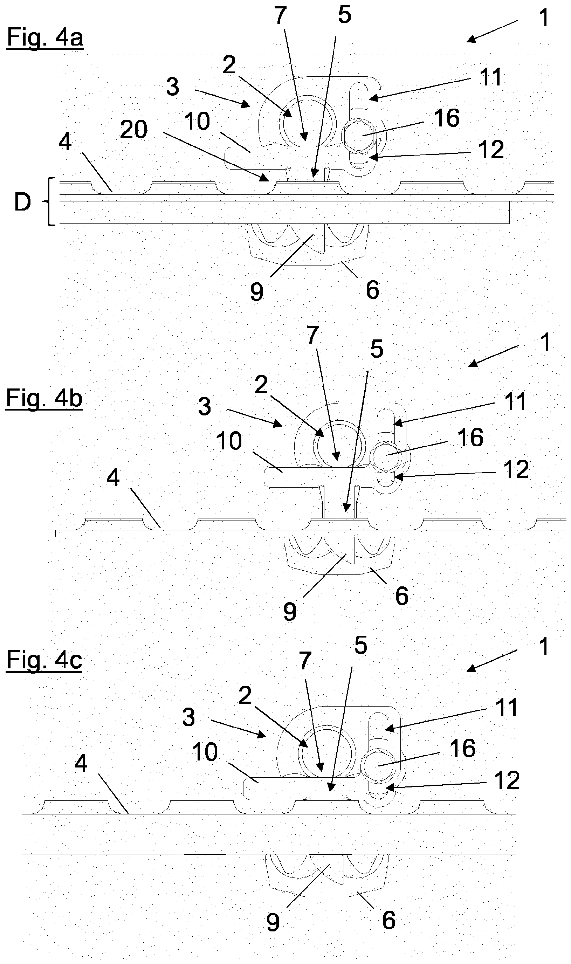

In den Figuren 4a bis 4c ist jeweils eine in eine unrunde Öffnung 5 einer Oberfläche 4 eingesetzte Vorrichtung 1 gemäß der ersten Ausführung gezeigt. Die Oberfläche 4 wird in den gezeigten Ausführungsbeispielen von einem Lochblech mit der Blechstärke D ausgebildet, wobei die Blechstärke D zwischen den Figuren 4a bis 4c variiert. Eines der Löcher des Lochblechs bildet die Öffnung 5 der Oberfläche 4 aus, wobei in der gezeigten Ausführung die Löcher zur Ausbildung einer Oberflächenstruktur eine Prägung 20 aufweisen, wodurch beispielsweise die Haftreibung einer auf der Oberfläche 4 abgestellten Ladung erhöht werden kann. Ein Einbringen bzw. Einsetzen eines Sicherungsmittels 7 der Vorrichtung 1 in Lochbleche mit unterschiedlicher Blechstärke D kann durch die verschwenk- und verschiebbare Lagerung des Sicherungsmittels 7 am Zurranker 3 ermöglicht werden, wobei ein vorteilhaft großer Verschiebebereich des Sicherungsmittels 7 relativ zum Zurranker 3 durch die Langlöcher 11,12 am Sicherungsmittel 7 und am Zurranker 3 gegeben ist. Ein Verschwenken oder Verschieben des Sicherungsmittels 7 relativ zum Zurranker 3 kann durch einen Benutzer durch Betätigen des Querabschnitts 10 des Sicherungsmittels 7 erleichtert werden. Die in den Figuren 4a bis 4c dargestellte Stellung der Vorrichtung 1 entspricht jeweils einer Sicherungsposition, in welcher die Fortsätze 6 des Zurrankers 3 die Öffnung 5 hintergreifen. Einer Bewegung des Fortsatzes 6 aus einer Einführposition in eine Sicherungsposition kann in der gezeigten Ausführung einer Drehbewegung des Fortsatzes 6 bzw. des Zurrankers 3 um den Ankerschaft 8 entsprechen.

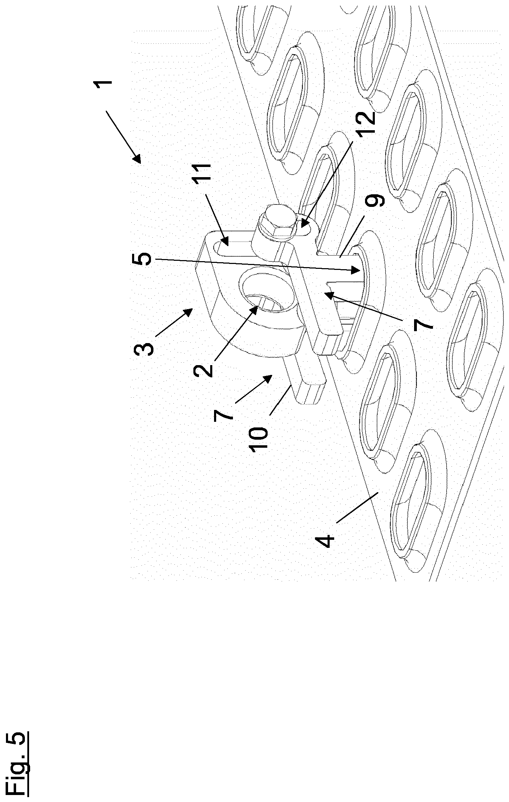

In Figur 5 ist eine perspektivische Ansicht einer in eine unrunde Öffnung 5 eingesetzten Vorrichtung 1 gemäß der ersten Ausführung gezeigt. Die Sicherungsmittel 7 sind zur Sicherung des Zurrankers 3 zusätzlich in die Öffnung 5 eingebracht, wodurch ein Bewegen der Fortsätze 6 bzw. des Zurrankers 3 aus der dargestellten Sicherungsposition in eine - ebenfalls zum Entfernen des Zurrankers 3 aus der Öffnung 5 geeignete - Einführposition verhindert wird. Die Abmessungen des Zurrankers 3, insbesondere des Ankerschafts 8, und der Sicherungsmittel 7, insbesondere deren stabförmigen Abschnitte 9, können an die Längs- und/oder Quererstreckung der Öffnung 5 angepasst sein. Es kann also bei der Sicherung der Vorrichtung 1 in der Öffnung 5 ein zumindest teilweiser Formschluss zwischen dem Ankerschaft 8, dem zumindest eine Sicherungsmittel 7 und der Öffnung 5 bestehen.

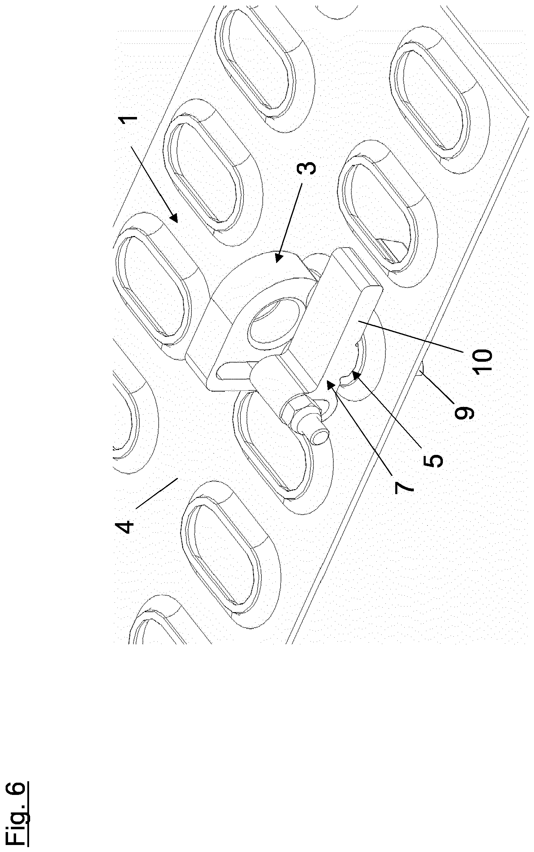

Figur 6 zeigt eine perspektivische Ansicht einer in eine unrunde Öffnung 5 eingesetzten Vorrichtung 1 gemäß einer zweiten Ausführung, bei welcher die Vorrichtung 1 ein einzelnes Sicherungsmittel 7 aufweist, welches wiederum verschwenkbar und verschiebbar am Zurranker 3 gelagert ist.

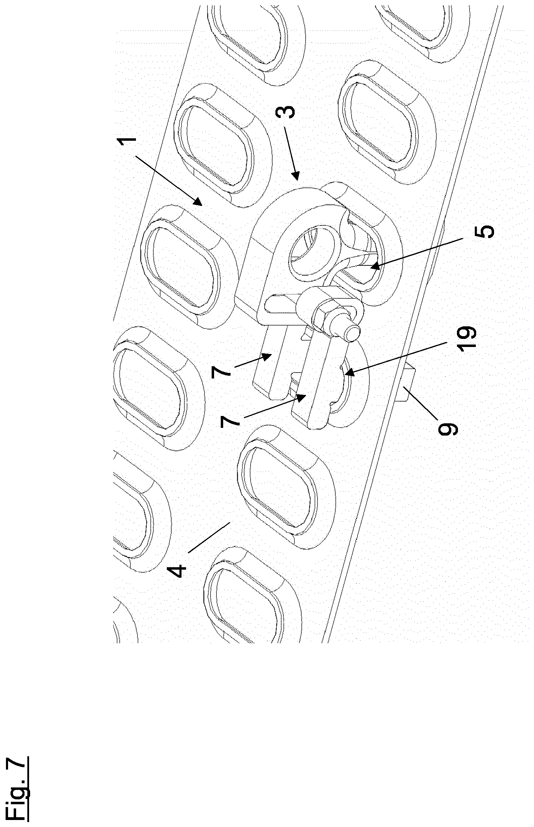

Figur 7 zeigt eine perspektivische Ansicht einer Vorrichtung 1 gemäß einer dritten Ausführung, wobei der Zurranker 3 der Vorrichtung 1 in eine erste Öffnung 5 der Oberfläche 4 eingesetzt ist und zur Sicherung des Fortsatzes 6 bzw. des Zurrankers 3 in der Sicherungsposition zwei schwenkbar und verschiebbar am Zurranker 3 gelagerte Sicherungsmittel 7 in eine gesondert zur Öffnung 5 ausgebildete weitere Öffnung 19 eingebracht sind. Eine Ausbildung mit einem einzelnen Sicherungsmittel 7 gemäß der Figur 6 ist ebenso denkbar.

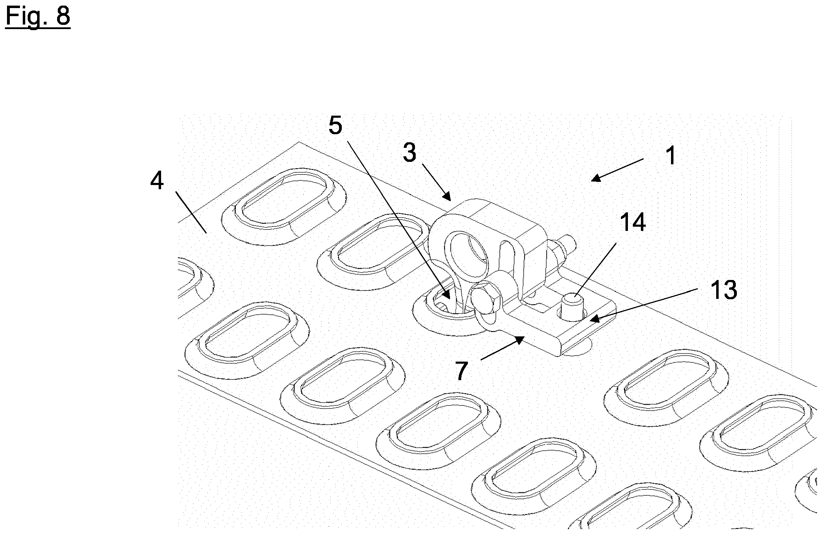

Figur 8 zeigt eine perspektivische Ansicht einer in eine Öffnung 5 eingesetzten Vorrichtung 1 gemäß einer vierten Ausführung. Wie dargestellt, weist das Sicherungsmittel 7 zur Sicherung des Fortsatzes 6 bzw. des Zurrankers 3 in der Sicherungsposition ein in dieser Ausführung eine Öffnung aufweisendes Verbindungsteil 13 zum formschlüssigen Verbinden des Sicherungsmittels 7 mit einer in dieser Ausführung stiftförmigen Oberflächenstruktur 14 der Oberfläche 4 auf.

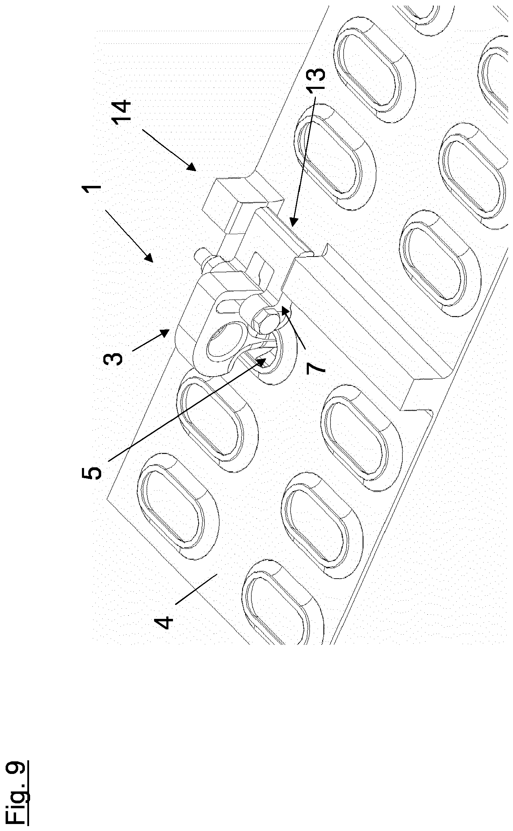

Figur 9 zeigt eine perspektivische Ansicht einer in eine Öffnung 5 eingesetzten Vorrichtung 1 gemäß einer fünften Ausführung. Wie dargestellt, weist das Sicherungsmittel 7 zur Sicherung des Fortsatzes 6 bzw. des Zurrankers 3 in der Sicherungsposition ein in dieser Ausführung im Wesentlichen bald quaderförmiges Verbindungsteil 13 zum formschlüssigen Verbinden des Sicherungsmittels 7 mit einer Oberflächenstruktur 14, welche in dieser Ausführung stegförmig mit einer stückweisen Ausnehmung ausgebildet ist, auf.

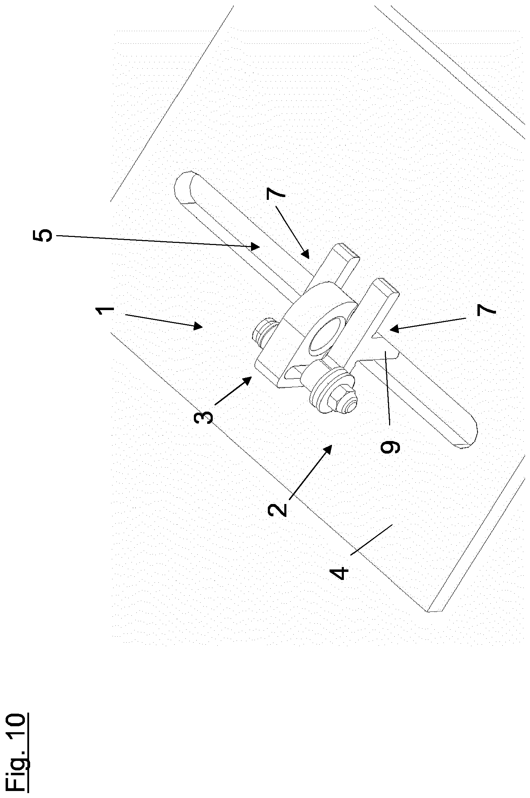

Figur 10 zeigt eine perspektivische Ansicht einer in eine Öffnung 5 eingesetzten Vorrichtung 1 gemäß der ersten Ausführung. Die Längserstreckung der als Langloch ausgebildeten Öffnung 5 in der Oberfläche 4 ist dabei deutlich größer als jene der Vorrichtung 1. Die Sicherung der Vorrichtung 1 in der Öffnung 5 erfolgt einen teilweisen Formschluss des sich in der Öffnung 5 befindenden Teils der Vorrichtung 1 mit der Öffnung 5. Der teilweise Formschluss ist durch die neben dem Ankerschaft verlaufenden, stabförmigen Abschnitte 9 der Sicherungsmittel 7 gegeben. Eine solche Ausbildung der Vorrichtung 1 erlaubt beispielsweise ein Verschieben der sich in der Sicherungsposition befinden Vorrichtung 1 entlang der als Langloch ausgebildeten Öffnung 5.

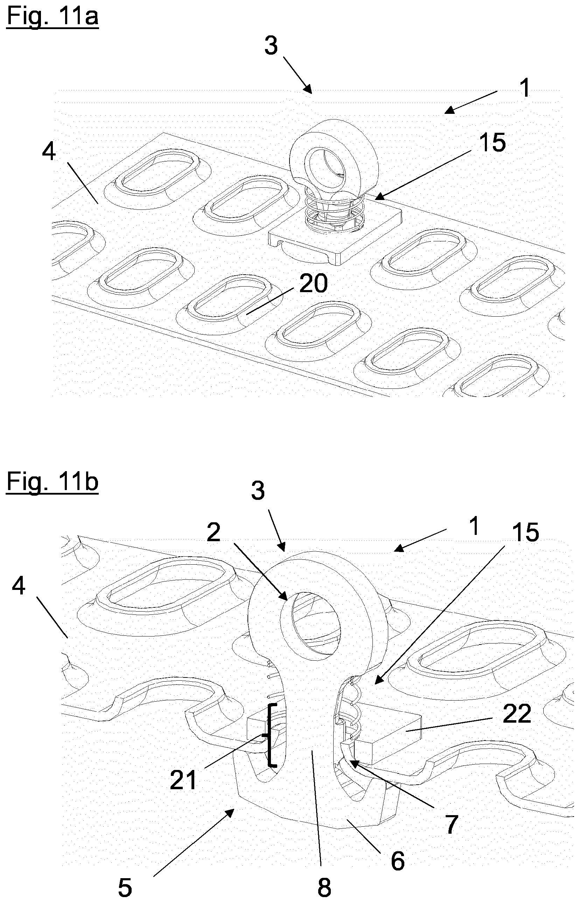

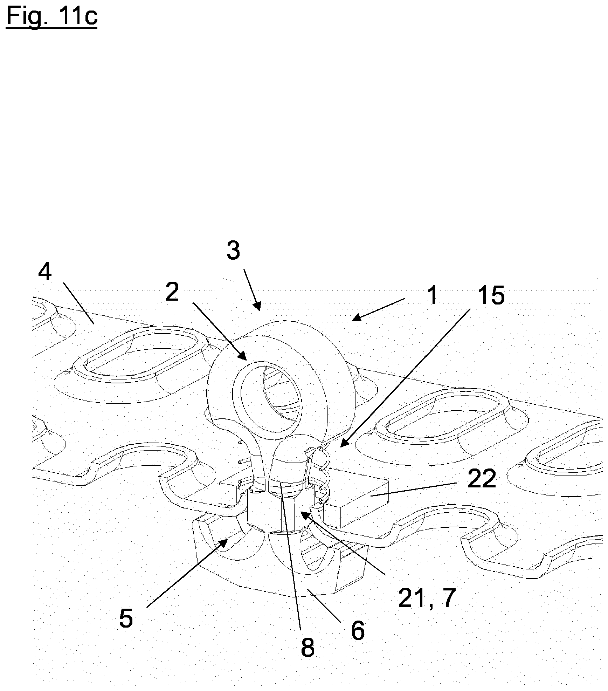

In den Figuren 11a, 11b und 11c ist eine perspektivische Darstellung und perspektivische Schnittdarstellungen einer in eine Öffnung 5 eingesetzten Vorrichtung 1 dargestellt. Die Vorrichtung 1 weist wieder einen Zurranker 3 mit einen Ankerschaft 8 auf. Auch der Fortsatz 6 verläuft wieder quer zum Ankerschaft 8. Das Sicherungsmittel 7 ist jedoch in Form eines unrunden Abschnitts 21 des Ankerschafts 8 ausgebildet, der bei Anordnung im Bereich der Öffnung 5 der Oberfläche 4 formschlüssig eine Bewegung des Fortsatzes 6 blockiert. Es ist zudem ein Haltemittel 22, wie dargestellt mit einem Kraftspeicher 15, vorgesehen, welches ein unbeabsichtigtes Entfernen des unrunden Abschnitts 21 des Ankerschafts 7 aus dem Bereich der Öffnung 5 der Oberfläche 4 verhindert. Wie in Figur 11c zu entnehmen ist, weist der unrunde Abschnitt 21 des Ankerschafts 8 eine im Wesentlichen rechteckige Querschnittsform auf. Es kann auch vorgesehen sein, dass das Haltemittel 22 verdrehsicher zum Zurranker 3 ausgebildet ist durch ein Umgreifen der Prägung 20 der Öffnung 5 eine Bewegung des Fortsatzes 6 blockiert.

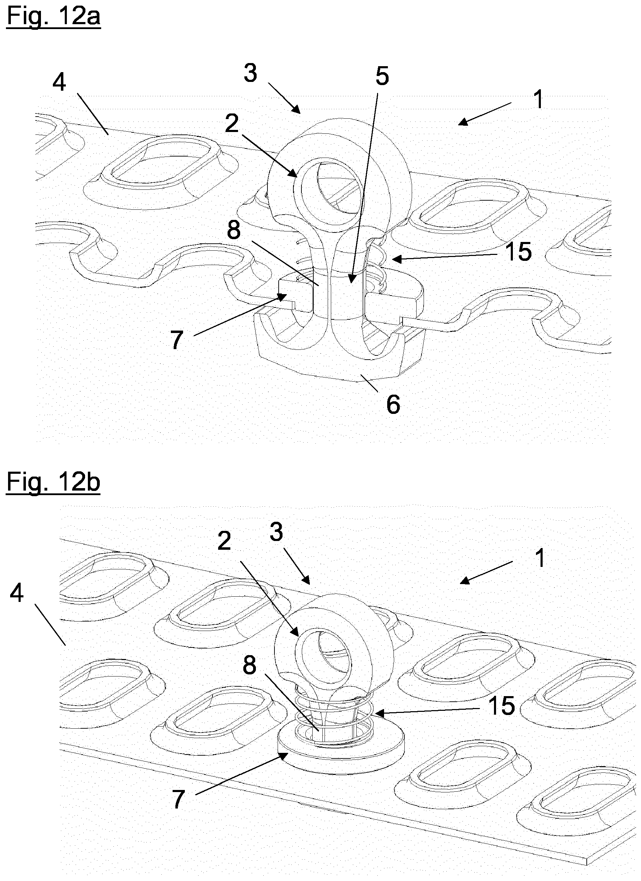

In Figur 12a und 12b ist eine in eine runde Öffnung 5 eingesetzten Vorrichtung 1 gezeigt. Im Unterschied zu den zuvor diskutierten Ausführungen kann eine Bewegung des Fortsatzes 6 von einer Einführposition in die Sicherungsposition einer Schwenkbewegung, also einem Verkippen, des Fortsatzes 6 bzw. des Zurrankers 3 entsprechen. Die Vorrichtung 1 weist ein teilweise in die Öffnung 5 einsetzbares bzw. eingesetztes und sich teilweise im Bereich der Öffnung 5 auf der Oberfläche abstützendes Sicherungsmittel 7 auf. Mittels eines Kraftspeichers 15 kann ein unbeabsichtigtes Entfernen des Sicherungsmittels 7 aus der Öffnung bzw. aus dem Bereich der Öffnung 5 der Oberfläche 4 verhindert werden.

In den Figuren 13a und 13b sind perspektivische Ansichten einer in eine Öffnung 5 eingesetzten Vorrichtung 1 gemäß der ersten Ausführung gezeigt, wobei die Vorrichtung 1 mit einem durch den zu Anschlag 2 hindurchragenden Anschlagmittel 23 in Form eines Hakens verbunden ist. Die Sicherungsmittel 7 weisen jeweils einen Anschlag 17 auf (siehe auch Figuren 2a und 2b), welche jeweils mit dem Anschlagmittel 23 in Form des Hakens zusammenwirken können. Durch dieses Zusammenwirken können sich die Sicherungsmittel 7 relativ zum Zurranker 3 feststellen lassen, wodurch wirksam ein unbeabsichtigtes Herauslösen der Vorrichtung 1 aus der Öffnung 5 verhindert werden kann.

### Bezugszeichenliste:

- 1: Vorrichtung
- 2: Zurranschlag
- 3: Zurranker
- 4: Oberfläche
- 5: Öffnung der Oberfläche
- 6: Fortsatz des Zurrankers
- 7: Sicherungsmittel
- 8: Ankerschaft
- 9: stabförmiger Abschnitt des Sicherungsmittels
- 10: Querabschnitt des Sicherungsmittels
- 11: Langloch des Zurrankers
- 12: Langloch des Sicherungsmittels
- 13: Verbindungsteil des Sicherungsmittels
- 14: Oberflächenstruktur der Oberfläche
- 15: Kraftspeicher
- 16: Lagerbolzen
- 17: Anschlag
- 18: Fangschnur
- 19: weitere Öffnung
- 20: Prägung
- 21: unrunder Abschnitt
- 22: Haltemittel
- 23: Anschlagmittel
- D: Blechstärke

## Patentansprüche

1. Vorrichtung (1) zur Sicherung einer Ladung relativ zu einer Oberfläche (4), wobei die Oberfläche (4) zumindest eine Öffnung (5) aufweist, wobei die Vorrichtung (1) aufweist:
- einen Zurranschlag (2)
- einen Zurranker (3) mit zumindest einem Fortsatz (6), wobei der Zurranker (3) mit dem zumindest einen Fortsatz (6) in einer Einführposition in die zumindest eine Öffnung (5) der Oberfläche (4) einführbar ist und der zumindest eine Fortsatz (6) durch eine Bewegung in eine Sicherungsposition bringbar ist, in welcher der Fortsatz (6) die Öffnung (5) der Oberfläche (4) hintergreift
wobei
die Vorrichtung (1) wenigstens ein
- in eine Öffnung (5) der Oberfläche (4) einbringbares und/oder
- an der Oberfläche (4) abstützbares
Sicherungsmittel (7) aufweist, welches durch Blockieren der Bewegung des Fortsatzes (6) ein unbeabsichtigtes Übergehen des zumindest einen Fortsatzes (6) des Zurrankers (3) von der Sicherungsposition in die Einführposition verhindert, wobei das zumindest eine Sicherungsmittel (7) gelenkig am Zurranker (3) gelagert ist, **dadurch gekennzeichnet, dass** das zumindest eine Sicherungsmittel (7) über ein am zumindest einen Sicherungsmittel (7) angeordnetes Langloch (12) und/oder über ein Langloch (11) des Zurrankers (3) am Zurranker (3) gelagert ist.

2. Vorrichtung nach Anspruch 1, wobei das Sicherungsmittel (7) zusätzlich zum Zurranker (3) in eine Öffnung (5) der Oberfläche (4) einbringbar und relativ zum Zurranker (3) feststellbar ist.

3. Vorrichtung nach Anspruch 2, wobei der Zurranker (3) einen Ankerschaft (8) aufweist und der zumindest eine Fortsatz (6) quer zum Ankerschaft (8) verläuft und das zumindest eine Sicherungsmittel (7) in dem in die Öffnung (5) eingebrachten Zustand einen neben dem Ankerschaft (8) verlaufenden, stabförmigen Abschnitt (9) aufweist.

4. Vorrichtung nach dem vorangehenden Anspruch, wobei das zumindest eine Sicherungsmittel (7) einen quer zum stabförmigen Abschnitt (9) verlaufenden Querabschnitt (10) aufweist.

5. Vorrichtung nach wenigstens einem der vorangehenden Ansprüche, wobei das zumindest eine Sicherungsmittel (7) wenigstens einen Anschlag (17) aufweist, durch welchen das zumindest eine Sicherungsmittel (7) mittels eines mit dem Zurranschlag (2) verbundenen Anschlagmittels relativ zum Zurranker (3) feststellbar ist.

6. Vorrichtung nach Anspruch 1, wobei das zumindest eine Sicherungsmittel (7) ein Verbindungsteil (13) zum formschlüssigen Verbinden des zumindest einen Sicherungsmittels (7) mit einer Oberflächenstruktur (14) der Oberfläche (4), vorzugsweise einer Prägung (20) einer Öffnung (5) der Oberfläche (4), aufweist.

## Claims

1. Apparatus (1) for securing a load relative to a surface (4), wherein the surface (4) has at least one opening (5), wherein the apparatus (1) has:
- a lashing stop (2),
- a lashing anchor (3) with at least one extension (6), wherein the lashing anchor (3) can be introduced with the at least one extension (6) in an introduction position into the at least one opening (5) of the surface (4) and the at least one extension (6) can be brought by a movement into a securing position in which the extension (6) engages behind the opening (5) of the surface (4),
wherein
the apparatus (1) has at least one securing means (7)
- which can be introduced into an opening (5) in the surface (4) and/or
- can be supported at the surface (4)
and which by blocking the movement of the extension (6) prevents unintentional transfer of the at least one extension (6) of the lashing anchor (3) from the securing position into the introduction position, wherein the at least one securing means (7) is mounted pivotably on the lashing anchor, **characterised in that** at least one securing means (7) is mounted to the lashing anchor (3) by way of a slot (12) arranged on the at least one securing means (7) and/or by way of a slot (11) of the lashing anchor (3).

2. Apparatus according to claim 1 wherein the securing means (7) in addition to the lashing anchor (3) can be introduced into an opening (5) of the surface (4) and can be fixed relative to the lashing anchor (3).

3. Apparatus according to claim 2 wherein the lashing anchor (3) has an anchor shaft (8) and the at least one extension (6) extends transversely relative to the anchor shaft (8) and the at least one securing means (7) in the state of being introduced into the opening (5) has a rod-shaped portion (9) extending beside the anchor shaft (8).

4. Apparatus according to the preceding claim wherein the at least one securing means (7) has a transverse portion (10) extending transversely relative to the rod-shaped portion (9).

5. Apparatus according to at least one of the preceding claims wherein the at least one securing means (7) has at least one stop (17), by means of which the at least one securing means (7) can be fixed relative to the lashing anchor (3) by means of a stop means connected to the lashing stop (2).

6. Apparatus according to claim 1 wherein the at least one securing means (7) has a connecting portion (13) for the positively locking connection of the at least one securing means (7) to a surface structure (14) of the surface (4), preferably an embossing (20) of an opening (5) in the surface (4).

## Revendications

1. Dispositif (1) de sécurisation d'une charge par rapport à une surface (4), dans lequel la surface (4) présente au moins une ouverture (5), dans lequel le dispositif (1) présente:
- une butée d'amarrage (2),
- un ancrage d'amarrage (3) avec au moins un prolongement (6), dans lequel l'ancrage d'amarrage (3) avec l'au moins un prolongement (6) peut être introduit dans une position d'introduction dans l'au moins une ouverture (5) de la surface (4) et l'au moins un prolongement (6) peut être amené par un déplacement dans une position de sécurisation, dans laquelle le prolongement (6) vient en prise par l'arrière avec l'ouverture (5) de la surface (4),
dans lequel
le dispositif (1) présente au moins un moyen de sécurisation (7)
- pouvant être introduit dans une ouverture (5) de la surface (4) et/ou
- pouvant s'appuyer sur la surface (4),
lequel empêche en bloquant le déplacement du prolongement (6) un transfert involontaire de l'au moins un prolongement (6) de l'ancrage d'amarrage (3) de la position de sécurisation dans la position d'introduction, dans lequel l'au moins un moyen de sécurisation (7) est monté de manière articulée à l'ancrage d'amarrage (3), **caractérisé en ce que** l'au moins un moyen de sécurisation (7) est monté à l'ancrage d'amarrage (3) par l'intermédiaire d'un trou oblong (12) disposé sur l'au moins un moyen de sécurisation (7) et/ou par l'intermédiaire d'un trou oblong (11) de l'ancrage d'amarrage (3).

2. Dispositif selon la revendication 1, dans lequel le moyen de sécurisation (7) peut être introduit en plus de l'ancrage d'amarrage (3) dans une ouverture (5) de la surface (4) et peut être immobilisé par rapport à l'ancrage d'amarrage (3).

3. Dispositif selon la revendication 2, dans lequel l'ancrage d'amarrage (3) présente une tige d'amarrage (8) et l'au moins un prolongement (6) s'étend de manière transversale à la tige d'ancrage (8), et l'au moins un moyen de sécurisation (7) présente dans l'état introduit dans l'ouverture (5) une section (9) en forme de barre s'étendant à côté de la tige d'ancrage (8).

4. Dispositif selon la revendication précédente, dans lequel l'au moins un moyen de sécurisation (7) présente une section transversale (10) s'étendant de manière transversale à la section (9) en forme de barre.

5. Dispositif selon au moins l'une quelconque des revendications précédentes, dans lequel au moins un moyen de sécurisation (7) présente au moins une butée (17), par laquelle l'au moins un moyen de sécurisation (7) peut être immobilisé au moyen d'un moyen de butée relié à la butée d'amarrage (2) par rapport à l'ancrage d'amarrage (3).

6. Dispositif selon la revendication 1, dans lequel l'au moins un moyen de sécurisation (7) présente une partie de liaison (13) servant à relier par complémentarité de forme l'au moins un moyen de sécurisation (7) à une structure de surface (14) de la surface (4), de préférence à un estampage (20) d'une ouverture (5) de la surface (4).
